Europäisches Patentamt

European Patent Office

Office européen des brevets

(11) Publication number: **0 098 741**
**B1**

# EUROPEAN PATENT SPECIFICATION

(45) Date of publication of patent specification: **04.11.87**

(51) Int. Cl.⁴: **F 16 C 32/00**

(21) Application number: **83303802.9**

(22) Date of filing: **30.06.83**

(54) **Fluid bearings.**

(30) Priority: **01.07.82 US 394378**

(43) Date of publication of application:
**18.01.84 Bulletin 84/03**

(45) Publication of the grant of the patent:
**04.11.87 Bulletin 87/45**

(84) Designated Contracting States:
**DE FR GB IT SE**

(56) References cited:
**DE-A-2 747 399**
**FR-A-2 146 845**
**FR-A-2 352 985**
**FR-A-2 464 401**
**US-A-4 082 375**
**US-A-4 223 958**

**PATENTS ABSTRACTS OF JAPAN, vol. 6, no.
260(M-180)(1138), 18th December 1982**

(73) Proprietor: **THE GARRETT CORPORATION**
**9851-9951 Sepulveda Boulevard P.O. Box 92248
Los Angeles, California 90009 (US)**

(72) Inventor: **Glaser, Jerry**
**8341 Delgany Avenue**
**Playa Del Rey California 90291 (US)**
Inventor: **Sirridge, Henry A.**
**26060 "D" Crenshaw Boulevard**
**Palos Verdes Penninsula Califonria 90274 (US)**
Inventor: **Ibach, Ernest J.**
**11273 Palms Boulevard**
**Los Angeles California 90066 (US)**

(74) Representative: **Arthur, George Fitzgerald et al
KILBURN & STRODE 30, John Street
London WC1N 2DD (GB)**

Courier Press, Leamington Spa, England.

**Description**

Process fluid or gas bearings are now being utilised in an increasing number of diverse applications. These fluid bearings generally comprise two relatively movable elements with a predetermined spacing therebetween filled with a fluid such as air, which, under dynamic conditions forms a supporting wedge sufficient to prevent contact between the two relatively movable elements.

More recently, improved fluid bearings, particularly gas bearings of the hydrodynamic type, have been developed by providing foils in the space between the relatively movable bearing elements. Such foils, which are generally thin sheets of a compliant material, are deflected by the hydrodynamic film forces between adjacent bearing surfaces and the foils thus enhance the hydrodynamic characteristics of the fluid bearings and also provide improved operation under extreme load conditions when normal bearing failure might otherwise occur. Additionally these foils provide the added advantage of accommodating eccentricity of the relatively movable elements and further provide a cushioning and dampening effect.

The ready availability of relatively clean process fluid or ambient atmosphere as the bearing fluid makes these hydrodynamic, fluid film lubricated, bearings particularly attractive for high speed rotating machinery. While in many cases the hydrodynamic or self-acting fluid bearings provide sufficient load bearing capacity solely from the pressure generated in the fluid film by the relative motion of the two converging surfaces, it is sometimes necessary to externally pressurise the fluid between the bearing surfaces to increase the load carrying capability. While these externally pressurised or hydrostatic fluid bearings do increase the load carrying capacity, they do introduce the requirement for such an external source of clean fluid under pressure.

An integral, end-mounted compliant bearing foil and foil stiffener is shown in Komatsu's DE—C—2747399. One end of the element is mounted in a journal bearing housing, and the foil extends circumferentially from the stiffener, overlapping the stiffener of the adjacent element.

According to the present invention, the element includes an underfoil which lies on one side of the stiffener, and when the element is assembled in the housing, the foil of one element lies over the underfoil and the stiffener of another.

The stiffener has to be springy to preload the foil through the underfoil attached to the stiffener, and accordingly it may be in wavy or corrugated form, perhaps with holes to establish the spring rate.

US—A—4,082,375 shows a thrust bearing with a wavy loading spring and thin and thick overlay plates, but they are separate stacked elements, and there is no suggestion of a single element containing all components.

The invention includes the integral foil, stiffener and underfoil element itself.

The invention may be carried out into practice in various ways, and one embodiment and some modifications will be described by way of example with reference to the accompanying drawings: in which;

FIGURE 1 is a perspective view of a foil journal bearing including integral end-mounted foil/stiffeners;

FIGURE 2 is an enlarged transverse cross-sectional view of the foil journal bearing of Figure 1 taken along line 2—2;

FIGURE 3 is a perspective view of a single integral end-mounted foil/stiffener in the bearing of Figure 2;

FIGURE 4 is a cut-away view similar to Figure 3 showing details of the stiffener; and

FIGURES 5, 6 and 7 are schematic diagrams of other alternative integral end-mounted foil/stiffeners; and

FIGURE 8 shows an alternative foil/stiffener to that shown in Figure 3.

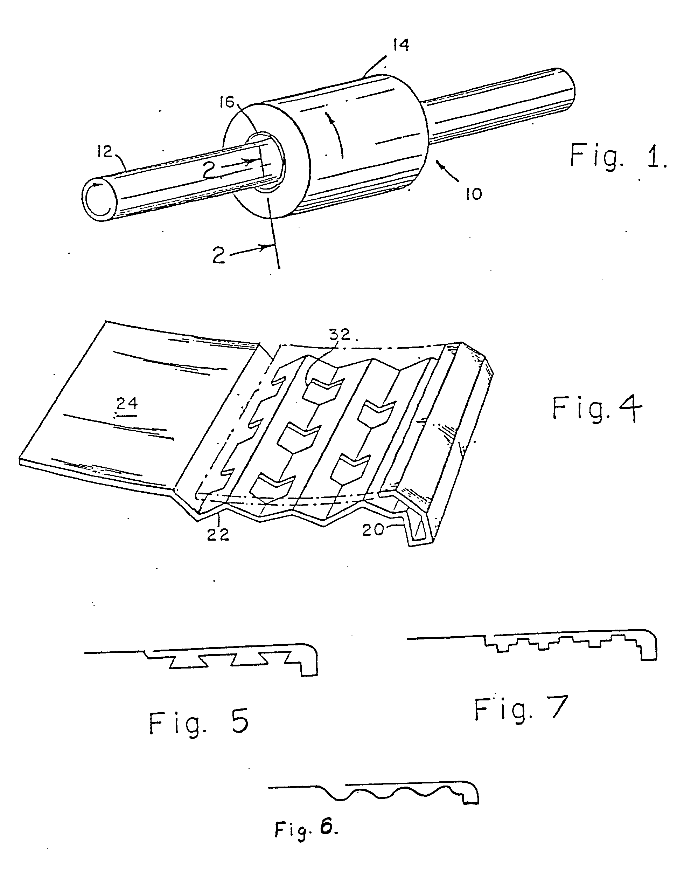

As shown in Figure 1, a foil journal bearing 10 has a plurality of individual foil/stiffener elements 16 disposed between a shaft 12 and a bushing 14 to rotate in the sense shown by the arrows on the end of the shaft 12, and the exterior of the bushing 14. Of course the shaft or the bushing may be stationary.

Figure 2 shows the mounting end 20 of an individual foil/stiffener element 16 mounted in a slot 18 in the bushing 14. Extending from the mounting end 20, each element 16 comprises a stiffening portion 22 and a foil portion 24, which overlaps the stiffening portion 22 of the adjacent element 16. The stiffener 22 shown as undulating, may in fact be wavy or having alternating ridges and grooves so long as it provides a spring-like pre-load underneath the foil 24 of the next element which lies over it.

An underfoil 30 lies over the stiffener 22 at the mounting end 20 of the element 16, so that the foil 24 which extends from the stiffener 22 lies over the underfoil 30 and the stiffener 22 of the adjacent element 16. The underfoil 30 is integral with the stiffener 22 at the mounting end 20 of the element 16 so that the element can be formed as a single piece.

The element is shown alone in Figure 3.

The stiffener as shown in Figure 4 may include cut out portions 32 to effectively change the spring rate thereof. Figures 5, 6 and 7 illustrate three alternative stiffening portion arrangements, each with a different spring rate.

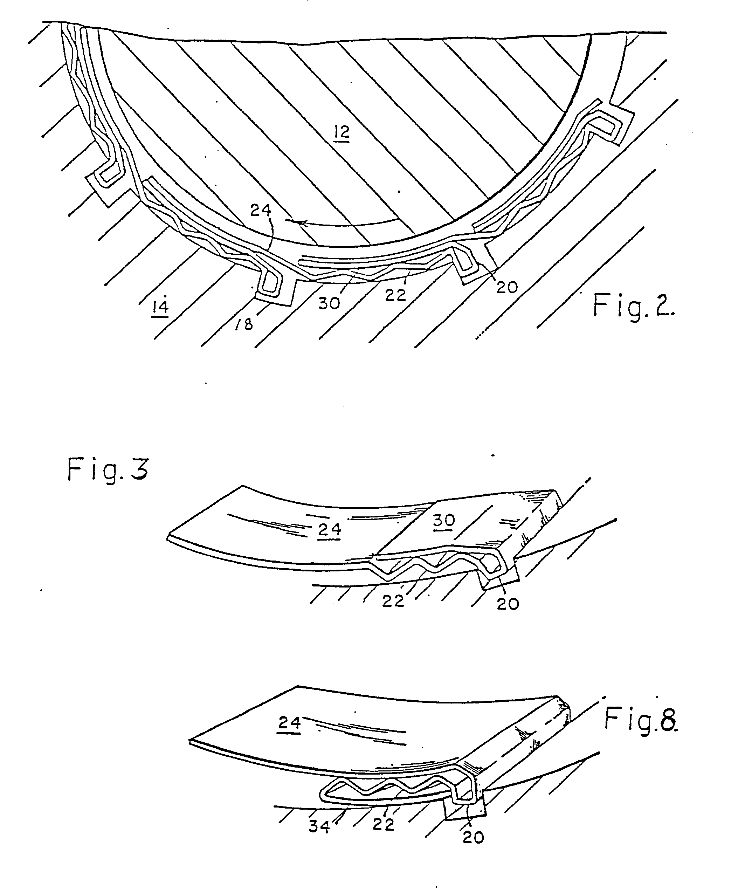

Figure 8 shows an alternative in which the foil 24 and the stiffener 22 extend in the same direction from the end mounting 20. The free end of the stiffener 22 is, however, folded back underneath itself towards the end mounting 20 to form a compliant underfoil 24.

By providing an integral foil, stiffener and underfoil, the construction and manufacture are simple.

While a number of specific embodiments of this invention have been illustrated and described, it is to be understood that these are provided by way of example only, and that the invention is not to be construed as being limited thereto but only by the proper scope of the following claims.

For example, although a journal bearing has been described, the invention can also be embodied in a thrust bearing.

## Claims

1. A fluid bearing, for example, a hydrodynamic or hydrostatic bearing between relatively rotatable or otherwise movable members (12, 14), comprising a number of integral elements (16) each including a compliant foil (24), and a springy stiffener (22); characterised in that each element includes an underfoil (30, 34) which lies on one side of the stiffener, and in that the foil (24) of one element (16) lies over the underfoil (30, 34) and the stiffener (22) of another.

2. A fluid bearing as claimed in Claim 1, in which in each element the underfoil (30) lies over the stiffener, and the foil (24) of one element (16) lies immediately over the underfoil (30) of another.

3. A bearing as claimed in Claim 1 or Claim 2 in which the elements are mounted at one of their ends (20) to one of the relatively movable members.

4. A bearing as claimed in any of the preceding claims in which the stiffener is of corrugated or like form.

5. A bearing as claimed in any preceding claim in which the stiffener is in the form of an undulating or wave-shaped plate, which may have cut outs (32) or convolutions (Figures 5, 6, 7 or 8) determining the spring rate.

6. A bearing as claimed in any of Claims 3 to 5 in which each element is mounted by having a portion (20) at one end or a component (26) integral with it at one end mounted in a slot in one of the movable members.

7. A bearing as claimed in any preceding claim in which each element has the stiffener and then the foil extending in order from the mounting end.

8. A bearing as claimed in any preceding claim in which each element has the stiffener and the underfoil extending in parallel from the mounting end with the underfoil lying over the stiffener.

9. A bearing as claimed in Claim 7 in which in each element the underfoil is about the same length as the stiffener.

10. A bearing as claimed in Claim 1 in which in each element the underfoil (34) lies under the stiffener (22).

11. An integral foil and stiffener element for a bearing comprising a compliant foil (24) and a springy stiffener (22); characterised in that the element also includes an underfoil (30, 34), the underfoil and stiffener lying one above the other.

12. An element as claimed in claim 11, in which the underfoil (30) lies over the stiffener (22).

13. An element as claimed in Claim 12 in which the underfoil (30) and stiffener (22) extend in parallel from a mounting end (20) of the element, and the foil is an extension of the stiffener beyond the underfoil.

14. An element as claimed in Claim 12 in which the underfoil (34) lies under the stiffener.

## Patentansprüche

1. Fluidlager, z.B. hydrodynamisches oder hydrostatisches Lager zwischen relativ zueinander drehbaren oder in sonstiger Weise bewegbaren Bauteilen (12, 14), mit einer Anzahl von integralen Elementen (16), von denen jedes eine nachgiebige Folie (24) und eine federnde Versteifung (22) aufweist, dadurch gekennzeichnet, daß jedes Element eine Unterfolie (30, 34) besitzt, die auf einer Seite der Versteifung liegt, und daß die Folie (24) eines Elementes (16) über der Unterfolie (30, 34) und der Versteifung (22) eines anderen Elementes liegt.

2. Fluidlager nach Anspruch 1, bei dem bei jedem Element die Unterfolie (30) über der Versteifung liegt, und daß die Folie (24) eines Elementes (16) unmittelbar über der Unterfolie (30) eines anderen Elementes liegt.

3. Lager nach Anspruch 1 oder 2, bei dem die Elemente an einem ihrer Enden (20) mit einem der relativ zueinander bewegbaren Bauteile befestigt sind.

4. Lager nach einem der Ansprüche 1—3, bei dem die Versteifung eine gewellte oder ähnliche Form hat.

5. Lager nach einem der Ansprüche 1—4, bei dem die Versteifung die Form einer schwingungs- oder wellenartigen Platte hat, die Aussparungen (32) oder Windungen (Figuren 5, 6, 7 oder 8) besitzt, die die Federcharakteristik bestimmen.

6. Lager nach einem der Ansprüche 3—5, bei dem jedes Element dadurch befestigt ist, daß es ein Teil (20) am einen Ende oder eine Komponente (26) besitzt, die integral damit am einen Ende in einem Schlitz in einem der bewegbaren Bauteile befestigt ist.

7. Lager nach einem der vorausgehenden Ansprüche, bei dem bei jedem Element die Versteifung und dann die Folie sich der Reihe nach von dem Befestigungsende aus erstrecken.

8. Lager nach einem der vorausgehenden Ansprüche, bei dem bei jedem Element die Versteifung und die Unterfolie sich parallel von dem Befestigungsende aus erstrecken, wobei die Unterfolie über der Versteifung liegt.

9. Lager nach Anspruch 7, bei dem bei jedem Element die Unterfolie etwa die gleiche Länge wie die Versteifung hat.

10. Lager nach Anspruch 1, bei dem bei jedem Element die Unterfolie (34) unter der Versteifung (22) liegt.

11. Integrales Folien- und Versteifungselement für ein Lager mit einer nachgiebigen Folie (24) und einer federnden Versteifung (22), dadurch gekennzeichnet, daß das Element ferner eine Unterfolie (30, 34) aufweist, und daß die Unterfolie und die Versteifung übereinander liegen.

12. Element nach Anspruch 11, bei dem die Unterfolie (30) über der Versteifung (22) liegt.

13. Element nach Anspruch 12, bei dem die Unterfolie (30) und die Versteifung (22) parallel von einem Befestigungsende (20) des Elementes ausgehen, und die Folie eine Verlängerung der Versteifung über die Unterfolie hinaus ist.

14. Element nach Anspruch 12, bei dem die Unterfolie (34) unter der Versteifung liegt.

**Revendications**

1. Palier à fluide, par exemple palier hydrodynamique ou hydrostatique entre des pièces (12, 14) mobiles en rotation ou autrement l'une par rapport à l'autre, comprenant une pluralité d'éléments unitaires (16) comportant chacun une lame souple (24) et un raidisseur élastique (22), caractérisé en ce que chaque élément comprend une sous-lame (30, 34) qui s'étend d'un côté du raidisseur, et en ce que la lame (24) d'un élément (16) s'étend au-dessus de la sous-lame (30, 34) et du raidisseur (22) d'un autre élément.

2. Palier à fluide suivant la revendication 1, dans lequel, dans chaque élément, la sous-lame (30) s'étend au-dessus du raidisseur, et la lame (24) d'un élément (16) s'étend immédiatement au-dessus de la sous-lame (30) d'un autre élément.

3. Palier suivant la revendication 1 ou la revendication 2, dans lequel les éléments sont montés à une de leurs extrémités (20), sur une des pièces mobiles l'une par rapport à l'autre.

4. Palier suivant l'une quelconque des revendications précédentes, dans lequel le raidisseur est de forme ondulée ou analogue.

5. Palier suivant l'une quelconque des revendications précédentes, dans lequel le raidisseur est sous la forme d'une plaque ondulée ou sinueuse, qui peut comporter des découpes (32) ou des configurations (figures 5, 6, 7 ou 8) déterminant la constante d'élasticité.

6. Palier suivant l'une quelconque des revendications 3 à 5, dans lequel chaque élément est fixé par une partie (20) située à une extrémité, ou un composant (26) solidaire de l'élément à une extrémité, qui est montée dans une rainure prévue dans l'une des pièces mobiles.

7. Palier suivant l'une quelconque des revendications précédentes, dans lequel le raidisseur puis la lame s'étendent dans cet ordre à partir de l'extrémité de montage de chaque élément.

8. Palier suivant l'une quelconque des revendications précédentes, dans lequel la raidisseur et la sous-lame s'étendent en parallèle à partir de l'extrémité de montage de chaque élément, la sous-lame étant située au-dessus du raidisseur.

9. Palier suivant la revendication 7, dans lequel, dans chaque élément, la sous-lame a à peu près la même longueur que le raidisseur.

10. Palier suivant la revendication 1, dans lequel, dans chaque élément, la sous-lame (34) est située sous le raidisseur (22).

11. Elément unitaire à lame et raidisseur pour un palier comprenant une lame souple (24) et un raidisseur élastique (22), caractérisé en ce que l'élément comprend également une sous-lame (30, 34), la sous-lame et le raidisseur étant situés l'un au-dessus de l'autre.

12. Elément suivant la revendication 11, dans lequel la sous-lame (30) est située au-dessus du raidisseur (22).

13. Elément suivant la revendication 12, dans lequel la sous-lame (30) et le raidisseur (22) s'étendent en parallèle à partir d'une extrémité de montage (20) de l'élément, et la lame est un pro-longement du raidisseur au delà de la sous-lame.

14. Elément suivant la revendication 12, dans lequel la sous-lame (34) est située sous le raidis-seur.

14

16

12

2

2

10

Fig. 1.

32

24

22

20

Fig. 4

Fig. 5

Fig. 7

Fig. 6.

1

Fig.2.

Fig.3

Fig.8.